Europäisches Patentamt

European Patent Office

Office européen des brevets

(11) Publication number: **0 037 712**
**A2**

# (12) EUROPEAN PATENT APPLICATION

(21) Application number: **81301431.3**

(22) Date of filing: **02.04.81**

(51) Int. Cl.³: **B 23 B 47/28**

(30) Priority: **02.04.80 ZA 801952**

(43) Date of publication of application:
**14.10.81 Bulletin 81/41**

(84) Designated Contracting States:
**AT BE CH DE FR GB IT LI LU NL SE**

(71) Applicant: **Abrahams, Peter Charles Buyskes**
**37 Melville Road**
**Plumstead Cape Town, Cape Province(ZA)**

(72) Inventor: **Abrahams, Peter Charles Buyskes**
**37 Melville Road**
**Plumstead Cape Town, Cape Province(ZA)**

(74) Representative: **Walter, Douglas Ernest et al,**
**HASELTINE LAKE & CO. Hazlitt House 28 Southampton**
**Buildings Chancery Lane**
**London WC2A 1AT(GB)**

(54) Machining jig.

(57) A machining jig which permits accurate machining eg drilling of a clamped workpiece (w). The jig has a column (16), and arch-like base portion (18) protruding from the column (16) and an overhang (14) protruding from the upper end of the column (16). A threaded rod (28), which is rotatable in a tapped bore (26) of a base (12) by means of a handle (32), lifts a replaceable anvil (31) towards a replaceable block (40). The block (40), which is received in a recess (38) in the underside of the overhang (14), has vee-surfaces (42) and an aperture (44). A bush (46) is received in an aperture of the overhang (14) and can be adjusted and locked by screws (54). A wall (56) forms a lubricant dam. The bush (46), the block (40) and the anvil (31) are all replaceable to suit them to work pieces (w) of different shapes.

FIG I

Croydon Printing Company Ltd.

1.

## MACHINING JIG

THIS INVENTION relates to a machining jig.

According to one aspect of the present invention there is provided a machining jig comprising a main component, a replaceable block releasably secured to the main component and having a pair of converging surfaces between which a workpiece can be received and an aperture between said surfaces for permitting passage through the block of a rotatable tool, an anvil mount, a replaceable anvil carried by said anvil mount, and means for urging said anvil mount towards said surfaces so that, in use, a workpiece between said anvil and said block is gripped thereby and positioned by said surfaces.

The main component can comprise a column, a base portion projecting from the foot of the column, an overhanging portion projecting from the column above the base portion and overlying the base portion, and a recess in the underside of the overhanging portion for receiving said block, said anvil mount being carried by said base portion. In one constructional form the urging means comprises a ram including a body part and a rod part, the anvil mount being carried by one of said parts. In another, and preferred, construction form there is a rotatable, threaded shaft received in a tapped bore in said base portion, said anvil mount being constituted by an upper portion of said shaft and the threaded portion of said shaft and said tapped bore constituting the means for urging said anvil mount towards said surfaces. To improve the versitility of the jig, said overhanging portion can include an aperture with a bush therein, the bush having a bore which is aligned with said aperture in the block and which bush restrains lateral motion of a tool passed therethrough. There can be means for displacing the bush laterally in the aperture in the overhanging portion and for locking the bush in its adjusted position. The displacing means can be constituted by screws and tapped bores of the overhanging portion, which tapped bores open into said aperture.

To permit sufficient lubrication during high speed work, a wall extending around the open upper end of said aperture in the overhanging portion can be provided to form a dam for lubricant.

A stop is desirably provided for locating a workpiece with respect to said aperture, and the stop can be adjustable with respect to said aperture in said block.

According to a further aspect of the present invention there is provided a machining jig comprising a main component including a column, a base portion extending laterally from the foot of the column, an overhanging portion extending laterally of the column at a level above the base portion and lying above the base portion, a tapped bore in the base portion, a threaded rod in said bore, the upper end of the rod constituting an anvil mount, a vertically extending aperture in said overhanging portion, means for attaching a block to the underside of said overhanging portion in such position as to enable an aperture in the block to be aligned with said aperture in the overhanging portion, and a wall encircling the open upper end of said aperture in said overhanging portion to form a lubricant dam.

Said base portion is preferably arch-like and said tapped bore opens into the zone below the arch-like portion, said rod having a bore extending axially therethrough, and the open lower end of the bore in the rod being in communication with said zone below the arch-like base.

A recess is desirably provided in the underside of the overhanging portion to receive said block, said aperture opening into said recess.

For a better understanding of the present invention, and to show how the same may be carried into effect, reference will now be made, by way of example, to the accompanying drawing in which:

Figure 1 is a side elevation of a jig for a machine tool; and

Figure 2 is a transverse section on the line II-II of Figure 1.

The illustrated jig comprises a main component 10 having a base portion 12, an overhanging portion 14 and a column 16 connecting the portions 12 and 14. The base portion 12 includes an arch formation 18 with flanges 20 extending outwardly on each side of the formation 18. There are apertures 22 in the flanges 20, these apertures receiving bolts (not shown) which secure the component 10 to the bed of a machine tool (not shown). The shape of the base 12 is such as to provide a recess 24 under the arch formation 18.

A tapped bore 26 is provided in the formation 18 and a short, screw threaded shaft 28 passes through the bore 26.  The shaft 28 has an enlarged head 30 at the upper end thereof and a handle 32 protrudes from the head 30.  The handle 32 enables the shaft 28 to be turned.  An axial bore 34 passes through the shaft 28 and the head 30.  A removable anvil 31 having a central bore 33 is received in the upper end of the bore 34.

An aperture 36 of circular cross section passes vertically through the portion 14 and there is a recess 38 of rectangular form in the underside of the overhanging portion 14.  The aperture 36 leads into the recess 38.

A block 40 is an accurate fit in the recess 38 and is held in place by two screws 41 which pass through the portion 14 and enter bores in the block 40.  The block 40 has two upwardly converging surfaces 42 which serve to center a workpiece W.  In the form illustrated, the workpiece W is in the form of a bar of circular cross-section but any other section can be machined by means of the jig.  The surfaces 42 can be at any desired angle with respect to horizontal.  Experimental work has shown that surfaces inclined at 45 degrees with respect to horizontal are suitable for most purposes.  The block 40 has a central, vertically extending aperture 44 therein which aperture lies between the surfaces 42.

A bush 46 is an accurate fit in the aperture 36, the bush 46 having a peripheral flange 48 at the upper end thereof. The flange 48 rests on the upper face of the overhanging portion 14. An axial bore 50 is provided in the bush 46.

Two (or more) tapped bores 52 extend horizontally through the overhanging portion 14, the bores 52 intersecting the aperture 36. Screws 54 in the bores 52 bear on the bush 46 to secure the bush. When tightened, the screws 54 hold the bush 46 in its adjusted position. Once the screws are loosened, the bush can be removed thereby enabling any other desired bush to be inserted. The bore 50 is smaller than the aperture 44.

An upstanding wall 56 encircles the aperture 36 and forms an oil dam. Lubricant for the tool, which is shown as a drill bit D, is fed into the oil dam created by the wall 56 and runs down through the various bores and apertures onto the workpiece W.

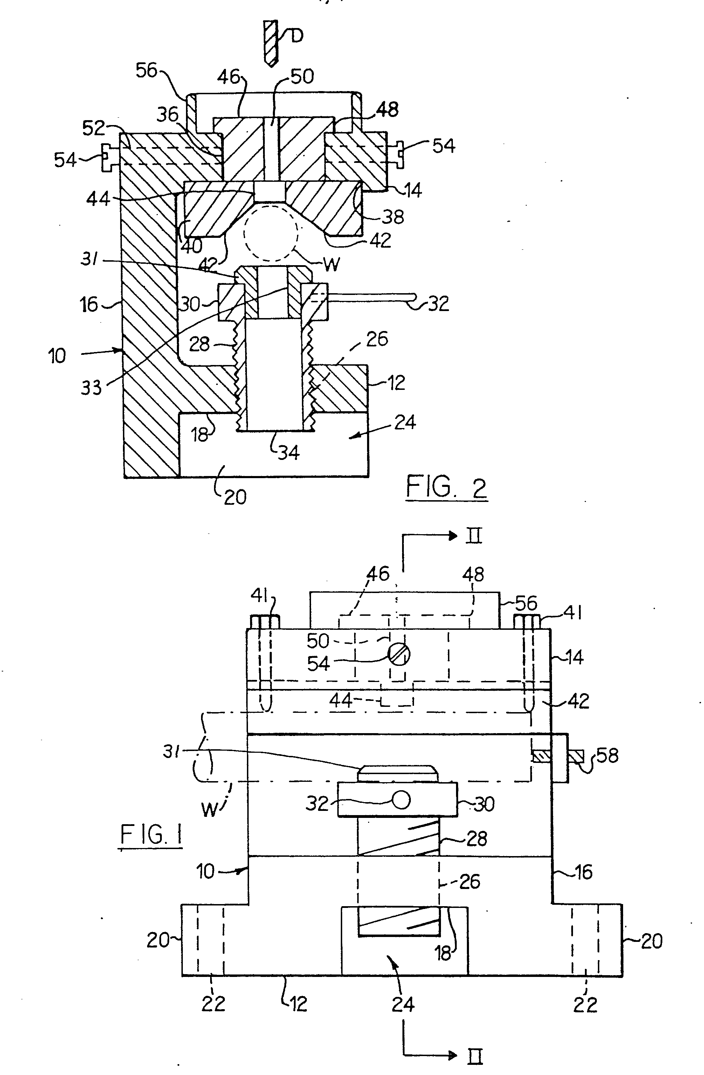

A stop in the form of a screw 58 is provided for limiting movement of the workpiece to the right as viewed in Figure 1. It will be understood that the stop 58 can readily be adjusted with respect to the block 40 and then secured in its adjusted position. This enables the requisite portion of the workpiece to be brought into register with the aperture 44 in the block 40. If desired the stop can form part of a graduated structure so that the position of the workpiece can be determined accurately from the measurements thereof, thereby facilitating very accurate placement of the hole drilled therein.

In use of the jig, a block 40 having a central aperture of the desired diameter and surfaces 42 sloping at the requisite angle, is fitted into the recess 38. A bush 46 having a bore 50 of suitable diameter is then placed in the aperture 36 and clamped by the screws 54 and a suitable anvil 31 is dropped into the bore 34. Subsequently the jig is bolted to the bed of the machine tool.

The workpiece W to be drilled is placed on the anvil 30 with the shaft 28 in its lower position. Thereafter, the handle 32 is swung through, say, 180 degrees. Rotation of the shaft 28 in the tapped bore 26 causes the shaft 28, and hence the anvil 31, to move towards the surfaces 42 thereby urging the workpiece W against the surfaces 42. The surfaces 42 centre the workpiece as it is displaced and, eventually, the centered workpiece is clamped between the anvil 31 and the block 40. It will be understood, from the preceding description, that centering and clamping of the workpiece occurs simply by turning the shaft 28.

The drill or tool bit D is a fairly close fit in the bore 50 of the bush 46. Thus the drill bit has little freedom to deflect and, when its tip encounters the workpiece W, it is constrained to enter the workpiece along a true line. When the tool emerges from the workpiece W, it enters the bore 34 of the anvil. Cuttings drop through the bores 33 and 34 and can readily be removed from the recess 24.

While specifically intended for use with a drill press, the jig can be used in any circumstances where quick and accurate location of a workpiece is necessary.

In a further form, the shaft 26 is replaced by an air or hydraulic ram or by a ramp or a wedge. By actuating a valve in the pressure line of the ram, the anvil 31 (which will normally be mounted on the rod of the ram rather than on its body) is displaced upwardly to clamp the workpiece or downwardly to release the workpiece.

It is possible to use a bush which has the bore 50 thereof eccentric with respect to the longitudinal axis thereof, and hence eccentric with respect to the bore 36. This enables the workpiece W to be machined off-centre. Of course, the bore 50 must register with the aperture 44.

CLAIMS:

1.      A machining jig comprising a main component, a replaceable block releasably secured to the main component and having a pair of converging surfaces between which a workpiece can be received and an aperture between said surfaces for permitting passage through the block of a rotatable tool, an anvil mount, a replaceable anvil carried by said anvil mount, and means for urging said anvil mount towards said surfaces so that, in use, a work piece between said anvil and said block is gripped thereby and positioned by said surfaces.

2.      A machining jig according to claim 1, wherein said main component comprises a column, a base portion projecting from the foot of the column, an overhanging portion projecting from the column above the base portion and overlying the base portion, and a recess in the underside of the overhanging portion for receiving said block, said anvil mount being carried by said base portion.

3.      A machining jig according to claim 2, wherein the urging means comprises a ram including a body part and a rod part, the anvil mount being carried by one of said parts.

4.      A machining jig according to claim 2, and including a rotatable, threaded shaft received in a tapped bore in said base portion, said anvil mount being constituted by an upper portion of said shaft, and the threaded portion of said shaft and said tapped bore constituting the means for urging said anvil mount towards said surfaces.

5. A machining jig according to any one of the claims 2, 3 and 4, wherein said overhanging portion includes an aperture with a bush therein, the bush having a bore which is aligned with said aperture in the block and which bush restrains lateral motion of a tool passed therethrough.

6.. A machining jig according to claim 5, wherein means are provided for displacing the bush laterally in the aperture in the overhanging portion and for locking the bush in its adjusted position.

7. A machining jig according to claim 5, wherein the displacing means is constituted by screws and tapped bores of the overhanging portion, which tapped bores open into said aperture.

8. A machining jig as claimed in claim 5 or 6, and including a wall extending around the open upper end of said aperture in the overhanging portion to form a dam for lubricant.

9. A machining jig as claimed in any preceding claim, and including a stop for locating a workpiece with respect to said aperture.

10. A machining jig according to claim 9, wherein said stop is adjustable with respect to said aperture in said block.

11. A machining jig comprising a main component including a column, a base portion extending laterally from the foot of the column, an overhanging portion extending laterally of the column at a level above the base portion and lying above the base portion, a tapped bore in the base portion, a threaded rod in said bore, the upper end of the rod constituting an anvil mount, a vertically extending aperture in said overhanging portion, means for attaching a block to the underside of said overhanging portion in such position as to enable an aperture in the block to be aligned with said aperture in the overhanging portion, and a wall encircling the open upper end of said aperture in said overhanging portion to form a lubricant dam.

12. A machining jig according to claim 11, wherein said base portion is arch-like and said tapped bore opens into the zone below the arch-like base portion, said rod having a bore extending axially therethrough and the open lower end of the bore in the rod being in communication with said zone below the arch-like base.

13. A machining jig according to claim 11 or 12, and including a recess in the underside of the overhanging portion to receive said block, said aperture opening into said recess.

0037712

D

56 46 50 48

36

52 54

54

44 38

40 42

42 W

31

16 30 32

10 28 26

33 12

18 24

20 34

FIG. 2

II

46 48

41 41

56

50 14

54

44 42

31 58

32 30

W

FIG. 1

28

10 16

26

20 20

18

22 12 24 22

II